# EUROPEAN PATENT SPECIFICATION

(11) **EP 2 601 809 B1**
(45) Date of publication and mention of the grant of the patent: **08.10.2014**
(21) Application number: 11749084.7
(22) Date of filing: 29.07.2011
(51) Int. Cl.: H04W 52/02, H04W 88/08, H04W 28/00

(54) **METHOD FOR MANAGING ENERGY CONSUMPTION IN A WIRELESS NETWORK AND CORRESPONDING WIRELESS NETWORK SYSTEM**
VERFAHREN ZUR VERWALTUNG DES STROMVERBRAUCHS IN EINEM DRAHTLOSEN NETZWERK UND ENTSPRECHENDES DRAHTLOSES NETZWERKSYSTEM
PROCÉDÉ POUR LA GESTION DE LA CONSOMMATION D'ÉNERGIE DANS UN RÉSEAU SANS FIL ET SYSTÈME DE RÉSEAU SANS FIL CORRESPONDANT

(30) Priority: 06.08.2010 EP 10008232
(43) Date of publication of application: 12.06.2013
(73) Proprietor: NEC Europe Ltd., 69115 Heidelberg (DE)
(72) Inventor: ROST, Peter, 01257 Dresden (DE); MAEDER, Andreas, 9707 Würzburg (DE); PÉREZ COSTA, Xavier, 69121 Heidelberg (DE)
(74) Representative: Ullrich & Naumann
(86) International application number: PCT/EP2011/003826
(87) International publication number: WO 2012/016670

(56) References cited:
- US-A- 5 487 174
- US-A1- 2003 007 467
- US-A1- 2003 054 812

## Description

The present invention relates to a method for managing energy consumption in a wireless network, in particular a mobile radio network.

Furthermore, the present invention relates to a wireless network system, in particular a mobile radio network system.

Energy efficiency is an important issue that plays a key role in designing and operating modern network architectures. In particular, in today's mobile radio networks (MRNs), energy costs contribute a large fraction to the operational expenditure (OPEX) of mobile network operators (MNOs). The main contribution comes hereby from the radio access network (RAN), and especially from the base stations (BSs) which can also be designated as radio access points. This fact, together with the general requirement to reduce energy consumption due to environmental concerns, drives the transition towards energy efficient RANs.

Current mobile communication networks are optimized in order to guarantee a minimum service quality during times with very high data requests. This means that mobile radio networks are designed such that they guarantee a sufficient quality of service (QoS) during traffic peak times that are usually in the daytime. However, there are periods of time in which the offered load in terms of traffic of a mobile radio network is much lower, e.g. in the evening and/or at night in business and shopping areas, no show periods in entertainment locations, weekends in office areas, etc. At these times with much lower data rate demands, some of the deployed base stations are not required anymore. The probability that certain base stations do not have any associated mobile station (MS) and are therefore idle is comparably high.

In order to save energy during these periods, an energy-saving method is to turn off base stations and increase the coverage area of the remaining base stations in order to maintain network QoS.

Base stations which are switched off still maintain an unused backhaul connection while the backhaul traffic of the base stations that have to increase their coverage is increased. This results in an asymmetric backhaul usage. Moreover, in the case that multiple base stations have been switched off in order to reduce the energy consumption, it might happen that a mobile station is able to receive a base station transmission on the downlink (DL) but is not able to increase its transmit power in the uplink (UL) such that the same base station is able to receive this mobile station transmission. The reason for this uplink/downlink discrepancy is that the typical maximum transmit power of a mobile station is much lower than the maximum transmit power of a base station (e.g. 23 dBm vs. 43 dBm), although advanced signal processing methods in the base station may help to mitigate this problem.

However, the following problems occur as a result of the uplink/downlink discrepancy:
- It may happen that the downlink signal strength is sufficient to maintain a radio link, but the uplink signal strength is not. This would then require to switch on an additional base station.
- With adaptive modulation and coding (AMC), the mobile station can transmit with a lower data rate, thus decreasing the QoS in the uplink.

Currently deployed mobile communication networks use base stations that serve both downlink and uplink. In order to achieve high data rates, high spatial reuse is desired and is achieved exploiting the existing shadowing situation. On the other hand, if the focus is on high connectivity, strong shadowing must be avoided in order to be able to serve a large area without significant performance loss for individual users. Since many mobile communication services are asymmetric regarding their uplink and downlink data rates, mobile radio networks require a higher spatial reuse for downlink connections, while for uplink connections the connectivity is the main optimization criterion.

The discrepancy between uplink and downlink is of particular interest in case of very low power devices like they are employed in machine-to-machine (M2M) communications. The delivery of low priority data might be done during low-peak times such as at night, which implies that a large number of nodes require more uplink resources than downlink resources in order to deliver the data to the assigned base station. In current systems this implies that a base station cannot be turned off as it needs to manage the M2M nodes within its cell, because M2M nodes are expected to be significantly coverage-limited due to their low power consumption requirements.

US 5,487,174 discloses methods for handling a bidirectional connection involving a mobile station in a cellular mobile radio communication system having adjacent cells of substantially different sizes, wherein the mobile station estimates the strength of radio signals received from base stations for cells of different sizes, the signal strength of radio signals received from the mobile station by base stations for cells of different sizes are estimated, decisions on which base station(s) should be responsible for an uplink channel of a bidirectional connection are based on uplink parameters including estimated strength for signals received at base stations, the signal strength at the base station(s) responsible for the uplink channel is used for controlling the output power of the mobile station, and decisions on which base station(s) should be responsible for the downlink channel of a bidirectional connection are based on downlink parameters including estimated strength of radio signals from base stations received at the mobile station.

It is therefore an object of the present invention to improve and further develop a method and a system of the initially described type in such a way that, by employing mechanisms that are readily to implement, energy consumption in a wireless network, in particular in a mobile radio network, is reduced without decreasing coverage due to uplink power limitations.

In accordance with the invention, the aforementioned object is accomplished by a method comprising the features of claim 1. According to this claim, a method for managing energy consumption in a wireless network, in particular a mobile radio network is claimed, wherein said wireless network includes radio access points that provide uplink and downlink connections to said wireless network for mobile stations, wherein the uplink and the downlink connection of at least one mobile station being connected to said wireless network are physically served by different radio access points, and wherein, at least temporarily, one or more of said radio access points function as unidirectional radio access points that provide either uplink connections or downlink connections - radio resource access - for said at least one mobile station.

Furthermore, the aforementioned object is accomplished by a system comprising the features of claim 11. According to this claim, a wireless network system, in particular a mobile radio network system is claimed, comprising radio access points that provide uplink and downlink connections for mobile stations, wherein said system is configured to physically serve the uplink and the downlink connection of at least one mobile station being connected to said system by different radio access points, wherein said system is further configured in such a way that, at least temporarily, one or more of said radio access points function as unidirectional radio access points that provide either uplink connections or downlink connections for said at least one mobile station.

According to the invention it has been recognized that the deployment of radio access points will be more flexible concerning energy consumption aspects in a wireless network if a radio access point decouples the serving of uplink and downlink connections. Specifically, according to the invention, the radio resource access is implemented in such a way that one or more of the radio access points function as unidirectional radio access points, at least temporarily. Functioning as unidirectional radio access point means that the radio access point provides uplink connections only or downlink connections only for one or more mobile stations. Consequently, for instance, a radio access point may disable its downlink functionality and continues with providing uplink functionality only. Therefore, energy consumption in a wireless network, in particular in a mobile radio network, can be reduced without decreasing coverage due to uplink power limitations and thereby an increased connectivity is achieved compared to a method that completely turns off the radio access point.

In the context of the invention, it is noted that a radio access point of a wireless network can also be designated as a base station of a wireless network.

According to a preferred embodiment a logical connection may be employed between the individual radio access points in order to coordinate the radio resource access between the at least one mobile station and the wireless network. For this purpose a direct or indirect logical connection may be used.

Advantageously, the at least one mobile station may be connected to the wireless network via a logical access point including one or more of the unidirectional radio access points. In particular, the logical access point may be composed of a set of unidirectional radio access points. Furthermore, it would be conceivable that the logical access point includes radio access points providing uplink and downlink connections besides the unidirectional radio access points.

According to a preferred embodiment the logical access point may perform radio resource and connection management for coordinating the access of the at least one mobile station to the wireless network, in particular by using control signalling. For instance, this is of particular interest for M2M communication where one radio access point serving downlink may control a certain set of M2M nodes with limited energy resources and transmission power capabilities. These nodes might not be able to provide a reliable communication link towards the radio access point serving downlink in the uplink due to the lower transmission power. Hence, multiple radio access points providing only uplink can harvest the M2M data while one radio access point providing downlink controls the M2M nodes. Thus, support for a highly asymmetric scenario as it is expected in M2M networks or during low-peak times is provided.

According to a preferred embodiment radio access points being equipped with either a physical radio interface for providing uplink connections from mobile stations to the radio access points or a physical radio interface for providing downlink connections from radio access points to mobile stations may be employed as unidirectional radio access points. Thus, for example, areas with radio access points providing uplink connections only - uplink relays - may be implemented.

With regard to reducing power consumption, it may be provided that radio access points being equipped with a physical radio interface for providing both uplink connections for mobile stations and downlink connections for mobile stations are employed as unidirectional radio access points. In doing so, the uplink connections or the downlink connections may be disabled on the basis of a predefined and/or a flexible performance measurement. Additionally, it may be provided that the uplink or downlink has again to be enabled in case the uplink and downlink resources of the radio access point are required.

Advantageously, the performance measurement may be performed after a connection between a radio access point and a mobile station is terminated. For instance, the performance measurement may be performed after every connection termination.

Furthermore, it may be provided that the performance measurement is performed at predefined time intervals.

According to a preferred embodiment a decision of disabling the uplink connection or the downlink connection is based on a predefined percentile of throughput over a predefined time interval, in particular on a predefined percentile of average throughput over a predefined time interval.

According to a further preferred embodiment it may be provided that in case the uplink or the downlink of a radio access point is to be disabled as a result of the performance measurement, a decision unit ascertains whether all mobile stations being currently served by the radio access point are able to be served by one or more other radio access points - target access points - of the wireless network.

Advantageously, the current load of a target access point, the previous performance of the target access point and the expected throughput by the mobile stations that have to be transferred to the target radio access point may be considered.

Furthermore it may be provided that in case the decision unit decides to disable a link direction - the uplink or the downlink - of the radio access point, each connection of the radio access point is grouped with the one or more other radio access points that will manage the disabled link direction.

According to a preferred embodiment a power control procedure may be employed in order to manage the transmit power of the mobile stations and/or of the radio access points. The separation of radio access points serving uplink and radio access points serving downlink requires the support of a power control procedure if path loss between mobile stations and radio access points serving downlink is lower than between mobile station and radio access points serving uplink. In this case, pre-coding with a reduced trace (lower transmit power) may be used to motivate the mobile station to transmit with higher power than it would have to in the conventional system. In the opposite case, the radio access point serving uplink receives the transmission of the mobile station with a better SINR (Signal to Interference-plus-Noise Ratio) than the radio access point serving downlink. The radio access point serving uplink may use reference signals with known transmit power from the mobile stations in order to estimate the path loss between radio access points serving uplink and mobile stations. Consequently, the radio access points serving downlink may inform the mobile station to reduce its transmit power to meet a certain target SINR. If this function is not implemented, the SINR at the radio access points serving uplink is higher than required.

The minimum granularity of the power control loop can be determined by the delay on the logical connections between the radio access points, which share uplink and downlink. For instance, in WCDMA (Wideband Code Division Multiple Access) power control updates can be sent every 0.67ms. In the case that the delay on the logical links exceeds this value, not every possible power control slot can be exploited. By contrast, in IEEE 802.16m the minimum granularity for fast power control is given by 5ms.

According to a preferred embodiment of the wireless network system one or more of the radio access points may have a physical radio interface either for providing an uplink connection or for providing a downlink connection.

Advantageously, it may be provided that one or more of the radio access points may have a physical radio interface for providing both an uplink connection and a downlink connection.

According to a further preferred embodiment the deployment of radio access points serving only uplink connections and radio access points serving only downlink connections may be separately designed.

Furthermore, it may be provided that radio access points that are deployed at the same place in uplink and downlink deployment have a physical radio interface for both an uplink connection and a downlink connection.

Basically, it may be provided that radio access points serving uplink only and radio access points serving downlink only are deployed and service-specifically operated in order to provide coverage in areas with a significantly higher service-demand. For example, this may be reflected by the set of implemented uplink/downlink parameters.

Furthermore, the deployment of unidirectional radio access points may be implemented in such a way that a load balancing of uplink and downlink is provided. Specifically with regard to cloud computing load balancing and symmetric distribution of computation resources may be implemented.

A further implementation might use an optimization of the deployment of unidirectional radio access points in such a way that the overall energy consumption is minimized due to the fact that not every radio access point has to maintain both uplink and downlink.

According to a preferred embodiment it may be provided that in case the uplink or the downlink of a radio access point is to be disabled, a decision unit is provided being configured to ascertain whether all mobile stations being currently served by the radio access point are able to be served by one or more other radio access points - target access points - of the wireless network.

Advantageously, one decision unit per radio access point may be provided in such a manner that each radio access point independently contacts target access points.

There are several ways how to design and further develop the teaching of the present invention in an advantageous way. To this end it is to be referred to the patent claims subordinate to patent claim 1 on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will we explained. In the drawing
- Fig. 1: is a schematic view illustrating an embodiment of a method or a wireless network system according to the present invention, and
- Fig. 2: is a schematic view illustrating a site selection process according to an embodiment of the present invention.

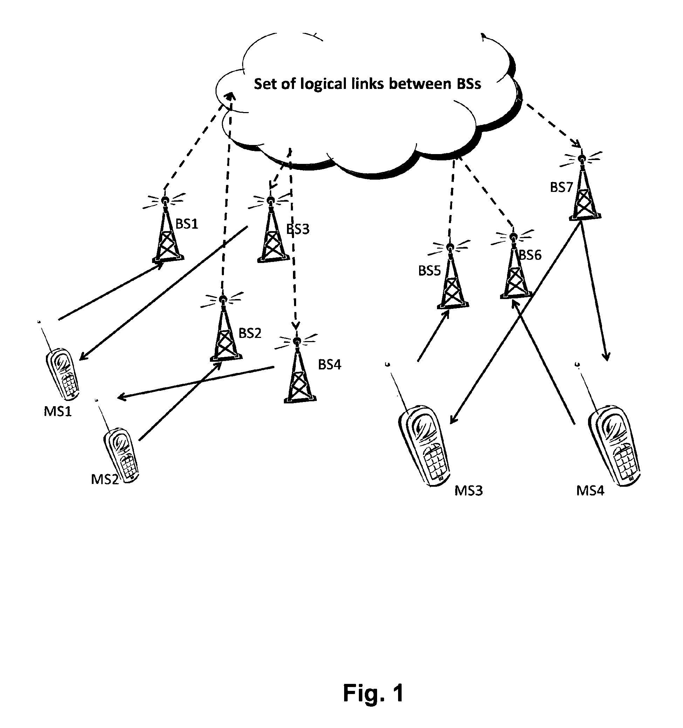

Fig. 1 shows an embodiment of a method or a wireless network system according to the present invention. Fig. 1 shows the underlying system model of a mobile radio network (MRN). The MRN comprises multiple radio base stations (BSs) serving a set of mobile stations (MSs). Each mobile station is associated with one uplink (UL) and downlink (DL) logical connection to the MRN. Furthermore, each mobile station is associated to - i.e. served by - one base station which performs radio resource and connection management and performs appropriate control signaling.

According to the setup of Fig. 1 uplink and downlink logical connection data can be transmitted by different base stations. In Fig. 1, mobile station MS1 is associated to base station BS3 in the downlink and to base station BS1 in the uplink. Uplink and downlink connections can be provided by different base stations. The base station that provides the uplink for a mobile station (UL-BS) and the base station that provides the downlink for a mobile station (DL-BS) may be different or the same BS.

The embodiment of the present invention illustrated in Fig. 1 exploits the differentiation of logical and physical base stations. More specifically, a mobile station has one or several logical connections to one logical base station with a single logical identifier, which provides uplink and downlink. However, this logical base station consists of a set of physical base stations for uplink and downlink transmission. Therefore, any mobile station is still associated to one logical base station. However, the MRN may associate multiple physical base stations with one mobile station. On the other hand, one logical base station can still consist of exactly one physical base station, which then manages both uplink and downlink connections and therefore is not restricted by the backhaul link capacity between the uplink and downlink entities.

An embodiment of a method according to the present invention can be implemented as follows:
- At first a base station (BS) A determines according to a predefined and flexible performance measure whether its uplink or downlink can be turned off. An implementation could use a predefined percentile of average throughput over a predefined time interval. Another implementation considers a central controller, which determines whether the downlink of BS A can be turned off. An implementation could perform this check after every connection termination with a mobile station. Another implementation could perform this check after a predefined time interval.
- Based on the feedback whether BS A fulfills the criterion to turn off uplink or downlink, a central decision unit identifies whether all mobile stations served by BS A can be served by another base station within the network. One implementation considers one decision unit per BS such that each base station independently contacts other base stations. Another implementation considers the current load of a base station, previous performance, and expected throughput by those mobile stations, which must be transferred to another base station.
- If the central decision unit decides that BS A can turn off the downlink, each connection of BS A is grouped with another base station, which will manage the downlink while BS A still manages the uplink. For each connection BS A has to exchange the logical connection context including all required and relevant information in order to allow for downlink-handover from BS A to grouped base stations. In a non-transparent implementation the mobile station is explicitly informed that uplink base station (UL-BS) and downlink base station (DL-BS) differ after or before the downlink-handover. In a transparent implementation, for each connection BS A and a DL-BS are grouped using a logical connection identifier, which is revealed to the mobile station.
- After BS A turned off the downlink it forwards all relevant payload and signaling data of its assigned mobile stations to the connected mobile radio network. In one implementation, the base station forwards all data directly to the assigned DL-BS. In another implementation, the base station only forwards relevant signaling information to the assigned DL-BS. In yet another implementation, the BS forwards both signaling and data information to the central core network, which then informs the DL-BS. Similarly to the previously explained system model, BS A still receives and accepts connection requests.
- If BS A turns on its downlink after receiving a trigger information from a central unit, it either takes over the connection context from another DL-BS or it only establishes the downlink for all new downlink-connections. In one implementation, the trigger information can also be received from another base station.

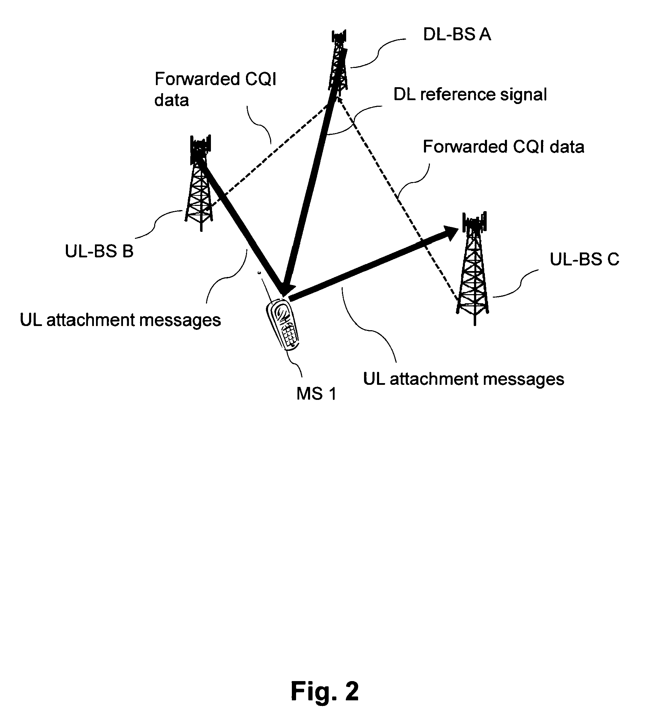

Fig. 2 shows a schematic view illustrating a site selection process according to an embodiment of the present invention. During network entry a mobile station has to select a base station for initial entry procedures, which is in the following denoted as site selection process. The site selection process involves direct communication between potential physical uplink base stations (UL-BSs) and downlink base stations (DL-BSs). In particular, the process is done as follows and illustrated in Fig. 2: a mobile station MS 1 receives and decodes a downlink reference signal, for example such as the frame preamble or any other kind of pilot data, from a downlink base station DL-BS A. Then, mobile station MS 1 performs a basic network attachment procedure, which typically involves the transmission of known encoded messages, e.g. CDMA codes, to downlink base station DL-BS A. An uplink base station UL-BS B and an uplink base station UL-BS C associated with downlink base station DL-BS A receive these messages, and forward the according channel quality information (CQI) to downlink base station DL-BS A. Thus, downlink base station DL-BS A collects all CQIs from all associated uplink base stations UL-BSs and selects one base station as the uplink serving base station for the mobile station MS 1. The mobile station MS 1 is still addressing logically the downlink base station DL-BS A in the uplink.

In a non-transparent implementation, the mobile station MS 1 of Fig. 2 receives a message that the mobile station MS 1 is now associated to different physical base stations in the uplink and downlink.

Furthermore, according to the embodiment illustrated in Fig. 2 the separation of uplink base station and downlink base station requires the support of power control procedures if path loss between mobile station and downlink base station is lower than between mobile station and uplink base station. In this case, pre-coding with a reduced trace (lower transmit power) can be used to motivate the mobile station to transmit with higher power than it would have to in a conventional system.

In the opposite case, the uplink base station receives the transmission of the mobile station with a better SINR (Signal to Interference-plus-Noise Ratio) than the downlink base station. The uplink base station can use reference signals with known transmit power from the mobile station in order to estimate the path loss between uplink base station and mobile station. Consequently, the downlink base station informs the mobile station to reduce its transmit power to meet a certain target SINR. If this function is not implemented, the SINR at the uplink base station is higher than required.

The minimum granularity of the power control loop is determined by the delay on the logical links between base stations, which share uplink and downlink. For instance, in WCDMA power control updates can be sent every 0.67ms. In the case that the delay on the logical links exceeds this value, not every possible power control slot can be exploited. By contrast, in IEEE 802.16m the minimum granularity for fast power control is given by 5ms.

The embodiment illustrated in Fig. 2 uses independent uplink and downlink handovers as a result of the independent uplink/downlink base stations. For one uplink connection, two or more physical base stations are assigned to the uplink base station set. Each uplink base station tries to decode and forward the data to the downlink base station in order to be included in the uplink base station set of the mobile station. Hence, the mobile station will have the same logical base station assignment, a non-interrupted downlink connection, and the mobile station signaling/controlling is forwarded by multiple uplink base stations, which increases the diversity. This allows for a seamless handover process with no or minimal interruptions. The same procedure can be performed during a downlink handover, although this implies a change of the logical base station assignment. However, again the uplink base station set still receives the signaling/controlling from the mobile station which allows for an improved downlink handover.

Due to the separation of uplink base station and downlink base station the channel reciprocity in the case of TDD (Time Division Duplex) is not guaranteed anymore. Hence, procedures introduced in the context of FDD (Frequency Division Duplex) for closed-loop MIMO (multiple-input and multiple-output) must be used, e.g. PMI (Pre-coding Matrix Index) based pre-coding instead of channel sounding.

The uplink base station needs to determine the individual time offsets in order to align the mobile station transmissions, which are then communicated to the downlink base station. In the case of base stations providing permanently uplink only and base station providing permanently downlink only the TTG (Transmit Transition Gap) and RTG (Receive Transition Gap) at base stations are not required anymore as neither uplink base station nor downlink base station have to switch from uplink to downlink and vice versa.

Both uplink base station and downlink base station require a logical connection for exchange of signaling and control messages. Communication between physical base stations is performed through a logical connection. This logical connection can be a direct physical link, a physical link routed using a gateway, a joint physical network using a star architecture, or any other network providing a logical link.

The embodiment illustrated in Fig. 2 uses a signaling and controlling protocol, where individual base stations can communicate directly with each other. It does not necessarily exchange the payload data between base stations, but the communication might be restricted to specific signaling/controlling parts, for instance (H)ARQ NACKs/ACKs and can directly receive or forward data from the core network. This implies additional implementation overhead.

On the other hand, forwarding of the payload data from uplink base stations to the downlink base stations reduces the implementation complexity but increases the required backhaul capacity. Furthermore, this protocol implies that security information about the connected mobile stations within an uplink base stations and downlink base stations set is exchanged. Since one downlink base stations can manage multiple mobile stations which may be connected to more than one uplink base station, the same resource allocation map can contain multiple entries for the same physical resource in order to increase the spatial resource reuse. This possibility is already given by the IEEE 802.16e standard and can be exploited. Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method for managing energy consumption in a wireless network, in particular a mobile radio network,
wherein said wireless network includes radio access points that provide uplink and downlink connections to said wireless network for mobile stations,
wherein the uplink and the downlink connection of at least one mobile station (MS1) being connected to said wireless network are physically served by different radio access points (BS1, BS3), and
wherein, at least temporarily, one or more of said radio access points function as unidirectional radio access points that provide either uplink connections or downlink connections - radio resource access - for said at least one mobile station (MS1).

2. Method according to claim 1, wherein a logical connection is employed between said radio access points in order to coordinate said radio resource access.

3. Method according to claim 1 or 2, wherein said at least one mobile station is connected to said wireless network via a logical access point including one or more of said unidirectional radio access points, in particular a set of said unidirectional radio access points,
wherein said logical access point may perform radio resource and connection management for coordinating the access of said at least one mobile station to said wireless network, in particular by using control signalling.

4. Method according to any of claims 1 to 3, wherein radio access points being equipped with either a physical radio interface for providing an uplink connection or a physical radio interface for providing a downlink connection are employed as said unidirectional radio access points.

5. Method according to any of claims 1 to 4, wherein radio access points being equipped with a physical radio interface for providing both an uplink connection and a downlink connection for mobile stations are employed as said unidirectional radio access points, wherein said uplink connection or said downlink connection is disabled on the basis of a predefined and/or a flexible performance measurement.

6. Method according to claim 5, wherein said performance measurement is performed after a connection between a radio access point and a mobile station is terminated, and/or
wherein said performance measurement is performed at predefined time intervals.

7. Method according to claim 5 or 6, wherein a decision of disabling said uplink connection or said downlink connection is based on a predefined percentile of throughput over a predefined time interval, in particular on a predefined percentile of average throughput over a predefined time interval.

8. Method according to any of claims 5 to 7, wherein in case the uplink or the downlink of a radio access point is to be disabled as a result of said performance measurement, a decision unit ascertains whether mobile stations being currently served by said radio access point are able to be served by one or more other radio access points - target access points - of said wireless network.

9. Method according to claim 8, wherein the current load of a target access point, the previous performance of said target access point and the expected throughput by said mobile stations that have to be transferred to said target radio access point are considered, and/or
wherein in case said decision unit decides to disable a link direction - the uplink or the downlink - of said radio access point, each connection of said radio access point is grouped with said one or more other radio access points that will manage the disabled link direction.

10. Method according to any of claims 1 to 9, wherein a power control procedure is employed in order to manage the transmit power of said mobile stations and/or of said radio access points.

11. Wireless network system, in particular a mobile radio network system, comprising radio access points that provide uplink and downlink connections for mobile stations, in particular for executing a method according to any of claims 1 to 10,
wherein said system is configured to physically serve the uplink and the downlink connection of at least one mobile station (MS1) being connected to said system by different radio access points (BS1, BS3),
wherein said system is further configured in such a way that, at least temporarily, one or more of said radio access points function as unidirectional radio access points that provide either uplink connections or downlink connections for said at least one mobile station (MS1).

12. System according to claim 11, wherein one or more of said radio access points have a physical radio interface either for providing an uplink connection or for providing a downlink connection, and/or
wherein one or more of said radio access points have a physical radio interface for providing both an uplink connection and a downlink connection.

13. System according to claim 11 or 12, wherein the deployment of radio access points serving only uplink connections and radio access points serving only downlink connections is separately designed.

14. System according to any of claims 11 to 13, wherein radio access points that are deployed at the same place in uplink and downlink deployment have a physical radio interface for both an uplink connection and a downlink connection.

15. System according to any of claims 11 to 14, wherein in case the uplink or the downlink of a radio access point is to be disabled, a decision unit is provided being configured to ascertain whether mobile stations being currently served by said radio access point are able to be served by one or more other radio access points - target access points - of said wireless network,
wherein one decision unit per radio access point may be provided.

## Patentansprüche

1. Verfahren zur Verwaltung des Energieverbrauchs in einem drahtlosen Netzwerk, insbesondere ein Mobilfunknetz,
wobei das drahtlose Netzwerk Funkzugangspunkte umfasst, die Uplink- und Downlink-Verbindungen zu dem drahtlosen Netzwerk für Mobilstationen bereitstellen,
wobei die Uplink- und die Downlink-Verbindung von mindestens einer Mobilstation (MS1), die mit dem drahtlosen Netzwerk verbunden ist, physisch durch verschiedene Funkzugangspunkte (BS1, BS3) versorgt werden, und
wobei zumindest zeitweise einer oder mehrere der Funkzugangspunkte als unidirektionale Funkzugangspunkte fungieren, die entweder Uplink-Verbindungen oder Downlink-Verbindungen - Funkressourcenzugriff-für die mindestens eine Mobilstation (MS1) bereitstellen.

2. Verfahren nach Anspruch 1, wobei eine logische Verbindung zwischen den Funkzugangspunkten verwendet wird, um den Funkressourcenzugriff zu koordinieren.

3. Verfahren nach Anspruch 1 oder 2, wobei die mindestens eine Mobilstation mit dem drahtlosen Netzwerk verbunden ist über einen logischen Zugangspunkt, der einen oder mehrere der unidirektionalen Funkzugangspunkte umfasst, insbesondere ein Satz von den unidirektionalen Funkzugangspunkten,
wobei der logische Zugangspunkt Funkressourcen- und Verbindungsmanagement zum Koordinieren des Zugangs der mindestens einen Mobilstation zu dem drahtlosen Netzwerk durchführen kann, insbesondere unter Verwendung von Steuersignalisierung.

4. Verfahren nach einem der Ansprüche 1 bis 3, wobei Funkzugangspunkte, die entweder mit einer physischen Funkschnittstelle zum Bereitstellen einer Uplink-Verbindung oder mit einer physischen Funkschnittstelle zum Bereitstellen einer Downlink-Verbindung ausgestattet sind, als die unidirektionalen Funkzugangspunkte verwendet werden.

5. Verfahren nach einem der Ansprüche 1 bis 4, wobei Funkzugangspunkte, die mit einer physischen Funkschnittstelle zum Bereitstellen von sowohl einer Uplink-Verbindung und einer Downlink-Verbindung für Mobilstationen ausgestattet sind, als die unidirektionalen Funkzugangspunkte verwendet werden, wobei die Uplink-Verbindung oder die Downlink-Verbindung auf Basis einer vordefinierten und/oder einer flexiblen Leistungsmessung deaktiviert wird.

6. Verfahren nach Anspruch 5, wobei die Leistungsmessung durchgeführt wird, nachdem eine Verbindung zwischen einem Funkzugangspunkt und einer Mobilstation beendet wird, und/oder
wobei die Leistungsmessung in vordefinierten Zeitabständen durchgeführt wird.

7. Verfahren nach Anspruch 5 oder 6, wobei eine Entscheidung der Deaktivierung der Uplink-Verbindung oder der Downlink-Verbindung auf einem vordefinierten Perzentil des Durchsatzes über ein vordefiniertes Zeitintervall basiert, insbesondere auf einem vordefinierten Perzentil des durchschnittlichen Durchsatzes über ein vordefiniertes Zeitintervall.

8. Verfahren nach einem der Ansprüche 5 bis 7, wobei für den Fall, dass der Uplink oder der Downlink eines Funkzugangspunktes als Ergebnis der Leistungsmessung deaktiviert werden soll, eine Entscheidungseinheit ermittelt, ob die momentan durch den Funkzugangspunkt versorgten Mobilstationen in der Lage sind, durch ein oder mehrere andere Funkzugangspunkte - Zielzugangspunkte - des drahtlosen Netzwerks versorgt zu werden.

9. Verfahren nach Anspruch 8, wobei die momentane Auslastung eines Zielzugangspunktes, die vorhergehende Leistung des Zielzugangspunktes und der voraussichtliche Durchsatz durch die Mobilstationen, die zu dem Zielzugangspunkt transferiert werden müssen, berücksichtigt werden, und/oder
wobei für den Fall, dass die Entscheidungseinheit entscheidet eine Verbindungsrichtung - der Uplink oder der Downlink - des Funkzugangspunktes zu deaktivieren, jede Verbindung des Funkzugangspunktes gruppiert wird mit dem einen oder den mehreren anderen Funkzugangspunkten, die die deaktivierte Verbindungsrichtung verwalten werden.

10. Verfahren nach einem der Ansprüche 1 bis 9, wobei eine Leistungssteuerungsprozedur verwendet wird, um die Sendeleistung der Mobilstationen und/oder der Funkzugangspunkte zu steuern.

11. Drahtloses Netzwerksystem, insbesondere ein Mobilfunknetzsystem, umfassend Funkzugangspunkte, die Uplink- und Downlink-Verbindungen für Mobilstationen bereitstellen, insbesondere zur Durchführung eines Verfahrens nach einem der Ansprüche 1 bis 10,
wobei das System konfiguriert ist, um die Uplink- und die Downlink-Verbindung von mindestens einer Mobilstation (MS1), die mit dem System verbunden ist, durch verschiedene Funkzugangspunkte (BS1, BS3) physisch zu versorgen,
wobei das System des Weiteren derart konfiguriert ist, dass zumindest zeitweise ein oder mehrere der Funkzugangspunkte als unidirektionale Funkzugangspunkte, die entweder Uplink-Verbindungen oder Downlink-Verbindungen für die mindestens eine Mobilstation (MS1) bereitstellen, fungieren.

12. System nach Anspruch 11, wobei einer oder mehrere der Funkzugangspunkte eine physische Funkschnittstelle entweder zum Bereitstellen einer Uplink-Verbindung oder zum Bereitstellen einer Downlink-Verbindung aufweisen, und/oder
wobei einer oder mehrere der Funkzugangspunkte eine physische Funkschnittstelle zum Bereitstellen sowohl einer Uplink-Verbindung und einer Downlink-Verbindung aufweisen.

13. System nach Anspruch 11 oder 12, wobei der Einsatz von Funkzugangspunkten, die nur Uplink-Verbindungen versorgen, und Funkzugangspunkte, die nur Downlink-Verbindungen versorgen, separat gestaltet wird.

14. System nach einem der Ansprüche 11 bis 13, wobei Funkzugangspunkte, die am gleichen Platz für Uplink- und Downlinkeinsatz angewendet werden, eine physische Funkschnittstelle für sowohl eine Uplink-Verbindung und eine Downlink-Verbindung aufweisen.

15. System nach einem der Ansprüche 11 bis 14, wobei für den Fall, dass der Uplink oder der Downlink eines Funkzugangspunktes deaktiviert werden soll, eine Entscheidungseinheit bereitgestellt wird, die konfiguriert ist, um zu ermitteln, ob Mobilstationen die momentan durch den Funkzugangspunkt versorgt werden, in der Lage sind, durch einen oder mehrere andere Funkzugangspunkte - Zielzugangspunkte - des drahtlosen Netzwerks versorgt zu werden,
wobei eine Entscheidungseinheit pro Funkzugangspunkt bereitgestellt werden kann.

## Revendications

1. Procédé de gestion de la consommation d'énergie dans un réseau sans fil, en particulier dans un réseau radio mobile,
dans lequel ledit réseau sans fil inclut des points d'accès radio qui fournissent des connexions en liaison montante et en liaison descendante audit réseau sans fil pour des stations mobiles ;
dans lequel les connexions en liaison montante et en liaison descendante d'au moins une station mobile (MS1) connectée audit réseau sans fil sont physiquement desservies par différents points d'accès radio (BS1, BS3) ; et
dans lequel, au moins temporairement, un ou plusieurs desdits points d'accès radio font office de points d'accès radio unidirectionnels qui fournissent, à des connexions en liaison montante ou des connexions en liaison descendante, un accès à des ressources radio, pour ladite au moins une station mobile (MS1).

2. Procédé selon la revendication 1, dans lequel une connexion logique est employée entre lesdits points d'accès radio en vue de coordonner ledit accès à des ressources radio.

3. Procédé selon la revendication 1 ou 2, dans lequel ladite au moins une station mobile est connectée audit réseau sans fil par l'intermédiaire d'un point d'accès logique incluant un ou plusieurs desdits points d'accès radio unidirectionnels, en particulier, un ensemble desdits points d'accès radio unidirectionnels ;
dans lequel ledit point d'accès logique peut mettre en oeuvre une gestion de ressources radio et de connexions pour coordonner l'accès des ladite au moins une station mobile audit réseau sans fil, en particulier en utilisant une signalisation de commande.

4. Procédé selon l'une quelconque des revendications 1 à 3, dans lequel des points d'accès radio, équipés d'une interface radio physique destinée à fournir une connexion en liaison montante ou d'une interface radio physique destinée à fournir une connexion en liaison descendante, sont utilisés en tant que lesdits points d'accès radio unidirectionnels.

5. Procédé selon l'une quelconque des revendications 1 à 4, dans lequel des points d'accès radio, équipés d'une interface radio physique destinée à fournir à la fois une connexion en liaison montante et une connexion en liaison descendante pour des stations mobiles, sont utilisés en tant que lesdits points d'accès radio unidirectionnels, dans lequel ladite connexion en liaison montante ou ladite connexion en liaison descendante est désactivée sur la base d'une mesure de performances prédéfinie et/ou d'une mesure de performances flexible.

6. Procédé selon la revendication 5, dans lequel ladite mesure de performances est mise en oeuvre après qu'une connexion entre un point d'accès radio et une station mobile est achevée ; et/ou
dans lequel ladite mesure de performances est mise en oeuvre à des intervalles de temps prédéfinis.

7. Procédé selon la revendication 5 ou 6, dans lequel une décision consistant à désactiver ladite connexion en liaison montante ou ladite connexion en liaison descendante est basée sur un centile prédéfini de rendement sur un intervalle de temps prédéfini, en particulier sur un centile prédéfini de rendement moyen sur un intervalle de temps prédéfini.

8. Procédé selon l'une quelconque des revendications 5 à 7, dans lequel, dans le cas où la liaison montante ou la liaison descendante d'un point d'accès radio doit être désactivée sous l'effet de ladite mesure de performances, une unité décisionnelle vérifie si des stations mobiles à cet instant desservies par ledit point d'accès radio sont aptes à être desservies par un ou plusieurs autres points d'accès radio, à savoir des points d'accès cibles, dudit réseau sans fil.

9. Procédé selon la revendication 8, dans lequel la charge en cours d'un point d'accès cible, les performances précédentes dudit point d'accès cible et le rendement attendu par lesdites stations mobiles qui doivent être transférées audit point d'accès radio cible sont pris en compte ; et/ou
dans lequel, dans le cas où ladite unité décisionnelle décide de désactiver une direction de liaison, à savoir la liaison montante ou la liaison descendante, dudit point d'accès radio, chaque connexion dudit point d'accès radio est groupée avec ledit un ou lesdits plusieurs autres points d'accès radio qui géreront la direction de liaison désactivée.

10. Procédé selon l'une quelconque des revendications 1 à 9, dans lequel une procédure de commande de puissance est employée dans le but de gérer la puissance d'émission desdites stations mobiles et/ou desdits points d'accès radio.

11. Système de réseau sans fil, en particulier un système de réseau radio mobile, comprenant des points d'accès radio qui fournissent des connexions en liaison montante et en liaison descendante pour des stations mobiles, en particulier pour mettre en oeuvre un procédé selon l'une quelconque des revendications 1 à 10 ;
dans lequel ledit système est configuré de manière à desservir physiquement les connexions en liaison montante et en liaison descendante d'au moins une station mobile (MS1) connectée audit système par différents points d'accès radio (BS1, BS3) ;
dans lequel ledit système est en outre configuré de sorte que, au moins temporairement, au moins un ou plusieurs desdits points d'accès radio font office de points d'accès radio unidirectionnels qui fournissent des connexions en liaison montante ou des connexions en liaison descendante pour ladite au moins une station mobile (MS1).

12. Système selon la revendication 11, dans lequel un ou plusieurs desdits points d'accès radio présentent une interface radio physique pour fournir une connexion en liaison montante ou pour fournir une connexion en liaison descendante ; et/ou
dans lequel un ou plusieurs desdits points d'accès radio présentent une interface radio physique pour fournir à la fois une connexion en liaison montante et une connexion en liaison descendante.

13. Système selon la revendication 11 ou 12, dans lequel le déploiement de points d'accès radio desservant uniquement des connexions en liaison montante et de points d'accès radio desservant uniquement des connexions en liaison descendante est conçu séparément.

14. Système selon l'une quelconque des revendications 11 à 13, dans lequel des points d'accès radio qui sont déployés au même endroit dans un déploiement de liaison montante et liaison descendante présentent une interface radio physique pour une connexion en liaison montante et pour une connexion en liaison descendante.

15. Système selon l'une quelconque des revendications 11 à 14, dans lequel, dans le cas où la liaison montante ou la liaison descendante d'un point d'accès radio doit être désactivée, une unité décisionnelle est fournie laquelle est configurée de manière à déterminer si des stations mobiles qui sont à cet instant desservies par ledit point d'accès radio sont aptes à être desservies par un ou plusieurs autres points d'accès radio, à savoir des points d'accès cibles, dudit réseau sans fil ;
dans lequel une unité décisionnelle, pour chaque point d'accès radio, peut être fournie.
